# EUROPEAN PATENT APPLICATION

(11) **EP 3 285 424 A1**
(43) Date of publication of application: **21.02.2018**
(21) Application number: 16779627.5
(22) Date of filing: 15.04.2016
(51) Int. Cl.: H04L 1/06

(54) **CHANNEL INFORMATION FEEDBACK METHOD AND DEVICE**

(30) Priority: 17.04.2015 CN 201510184679
(71) Applicant: China Mobile Communications Corporation, Beijing 100032 (CN)
(72) Inventor: TONG, Hui, Beijing 100032 (CN)
(74) Representative: Gevers Patents
(86) International application number: PCT/CN2016/079454
(87) International publication number: WO 2016/165652

(57) **Abstract**

In an embodiment, a Node B configures a first Channel State Information-Reference Signal (CSI-RS) and ports configured to send the first CSI-RS; and the Node B sends the first CSI-RS to User Equipment (UE) at the configured ports. Therefore, downlink channel information feedback in Three-Dimensional Multiple-Input Multiple-Output (3D-MIMO) may be supported.

## Description

### CROSS-REFERENCE TO RELATED APPLICATIONS

The disclosure claims priority to Chinese Patent Application No. 201510184679.9, submitted in China on April 17, 2015, the contents of which are incorporated herein by reference in its entirety.

### TECHNICAL FIELD

The disclosure relates to the field of communication technology, and particularly to a channel information feedback method and device.

### BACKGROUND

In a Multiple-Input Multiple-Output (MIMO) transmission manner, a Node B may perform data transmission with User Equipment (UE) by using multiple antenna ports. In a communication system in a related technology, antennae of a Node B are usually deployed in a horizontal arrangement with a smaller number. For example, in a Long Term Evolution (LTE) system, a number of antenna ports of an evolved Node B is 1, 2, 4 or 8 at present.

A Node B is required to perform downlink data scheduling on the basis of downlink channel information fed back by UE. For this, the UE is required to perform a channel measurement. Along with the development of an antenna technology, an antenna array may be enhanced from a current horizontal arrangement into a Three-Dimensional (3D) and vertical arrangement, and a number of antennae of a Node B may thus also be sharply increased, for example, increased to 16, 32, 64, 128 and even more. Therefore, 3D-MIMO transmission is formed.

There is yet no related solution capable of supporting downlink channel information feedback in 3D-MIMO in the related technology.

### SUMMARY

Embodiments of the disclosure provide a channel information feedback method and device, which are used for supporting downlink channel information feedback in 3D-MIMO.

An embodiment of the disclosure provides a channel information feedback method, which may include that:
a Node B configures a first Channel State Information-Reference Signal (CSI-RS) and ports configured to send the first CSI-RS; and
the Node B sends the first CSI-RS to UE at the configured ports, the first CSI-RS being configured for the UE to perform downlink channel measurement and feed back first downlink channel information.

Optionally, the first CSI-RS may be a precoded CSI-RS.

Optionally, a number of the ports configured to send the first CSI-RS may be smaller than or equal to a number of receiving antennae of the UE.

Optionally, the number of the ports configured to send the first CSI-RS may be two, and the two ports may correspond to different polarization directions of antennae of the Node B.

Optionally, the first downlink channel information may include a Channel Quality Indicator (CQI) and/or a Precoding Matrix Indicator (PMI).

Optionally, if the first CSI-RS is a CSI-RS of two ports, the first downlink channel information may include the CQI and the PMI; and
if the first CSI-RS is a CSI-RS of a single port, the first downlink channel information may include the CQI.

Optionally, the operation that the Node B configures the first CSI-RS may include that:
when the UE is required to perform single-stream transmission, the Node B configures a first CSI-RS of a single port; and
when the UE is required to perform double-stream transmission, the Node B configures a first CSI-RS of two ports, the two ports corresponding to different polarization directions of the antennae of the Node B.

Optionally, before the operation that the Node B configures the first CSI-RS and the ports configured to send the first CSI-RS, the method may further include that:
the Node B configures a second CSI-RS and ports configured to send the second CSI-RS; and
the Node B sends the second CSI-RS to the UE at the configured ports configured to send the second CSI-RS, the second CSI-RS being configured for the UE to feed back a channel Rank Indication (RI).

Optionally, the second CSI-RS may be a CSI-RS which is not precoded.

Optionally, the operation that the Node B sends the second CSI-RS to the UE may include that:
the Node B sends the second CSI-RS to the UE on part of occupied antennae.

Optionally, the number of the ports configured to send the first CSI-RS may be smaller than or equal to a number of the ports configured to send the second CSI-RS.

Optionally, the operation that the Node B configures the first CSI-RS may include that:
the Node B determines uplink channel information according to an uplink Sounding Reference Signal (SRS) sent by the UE;
the Node B estimates second downlink channel information on the basis of the determined uplink channel information, and determines precoding matrix information when downlink data is sent to the UE on the basis of the estimated second downlink channel information; and
the Node B configures the first CSI-RS on the basis of the determined precoding matrix information.

Optionally, the operation that the Node B configures the first CSI-RS may include that:
the Node B configures the second CSI-RS and the ports configured to send the second CSI-RS;
the Node B sends the second CSI-RS to the UE at the configured ports configured to send the second CSI-RS to enable the UE to feed back third downlink channel information;
the Node B determines the precoding matrix information when the downlink data is sent to the UE on the basis of the third downlink channel information fed back by the UE; and
the Node B configures the first CSI-RS on the basis of the determined precoding matrix information.

Another embodiment of the disclosure provides a channel information feedback method, which may include that:
UE receives a first CSI-RS sent by a Node B;
the UE performs downlink channel measurement to determine first downlink channel information on the basis of the first CSI-RS; and
the UE feeds back the first downlink channel information to the Node B.

Optionally, the first CSI-RS may be a precoded CSI-RS.

Optionally, the first downlink channel information may include a CQI and/or a PMI.

Optionally, if the first CSI-RS is a CSI-RS of two ports, the first downlink channel information may include the CQI and the PMI; and
if the first CSI-RS is a CSI-RS of a single port, the first downlink channel information may include the CQI.

Optionally, before the operation that the UE receives the first CSI-RS sent by the Node B, the method may further include that:
the UE receives a second CSI-RS sent by the Node B; and
the UE performs downlink channel measurement on the basis of the second CSI-RS, and feeds back a channel RI on the basis of a channel measurement result.

Optionally, before the operation that the UE receives the first CSI-RS sent by the Node B, the method may further include that:
the UE receives the second CSI-RS sent by the Node B; and
the UE performs downlink channel measurement on the basis of the second CSI-RS, and feeds back third downlink channel information, the third downlink channel information being configured for the Node B to determine precoding matrix information for configuration of the first CSI-RS.

Optionally, the second CSI-RS may be a CSI-RS which is not precoded.

An embodiment of the disclosure provides a channel information feedback device, which may include:
a configuration module, configured to configure a first CSI-RS and ports configured to send the first CSI-RS; and
a sending module, configured to send the first CSI-RS to UE at the configured ports, the first CSI-RS being configured for the UE to perform downlink channel measurement and feed back first downlink channel information.

Another embodiment of the disclosure provides a channel information feedback device, which may include:
a receiving module, configured to receive a first CSI-RS sent by a Node B;
a determination module, configured to perform downlink channel measurement to determine first downlink channel information on the basis of the first CSI-RS; and
a sending module, configured to feed back the first downlink channel information to the Node B.

In the embodiments of the disclosure, the Node B configures the first CSI-RS and the ports configured to send the first CSI-RS; and the Node B sends the first CSI-RS to the UE at the configured ports. Therefore, downlink channel information feedback in 3D-MIMO may be supported.

### BRIEF DESCRIPTION OF DRAWINGS

In order to describe the technical solutions in the embodiments of the disclosure or in the related technology more clearly, drawings required to be used for descriptions about the embodiments or the related technology will be simply introduced below. Obviously, the drawings in the following descriptions are only some embodiments recorded in the disclosure. Those skilled in the art may further obtain other drawings according to these drawings without creative work. The following drawings are not intentionally drawn in an equal scaling manner according to practical sizes, and focus on presenting the theme of the disclosure.
Fig. 1 is a flowchart of a channel information feedback method according to some embodiments of the disclosure.
Fig. 2 is a schematic diagram of feeding back a phase difference and a CQI by UE.
Fig. 3 is a schematic diagram of sending a Rank Indication-Reference Signal (RI-RS) and a short-term CSI-RS.
Fig. 4 is a schematic diagram of feeding back an RI by sending a CSI-RS through part of ports.
Fig. 5 is a flowchart of a channel information feedback method according to some other embodiments of the disclosure.
Fig. 6 is a flowchart of a channel information feedback method according to some other embodiments of the disclosure.
Fig. 7 is a structure diagram of a channel information feedback device according to some other embodiments of the disclosure.
Fig. 8 is a structure diagram of a channel information feedback device according to some other embodiments of the disclosure.

### DETAILED DESCRIPTION

In order to make the purposes, technical solutions and advantages of the embodiments of the disclosure clearer, the technical solutions of the embodiments of the disclosure will be described clearly and completely below in combination with the drawings of the embodiments of the disclosure. Obviously, the described embodiments are not all embodiments but only part of embodiments of the disclosure. All other embodiments obtained by those skilled in the art on the basis of the described embodiments of the disclosure fall within the scope of protection of the disclosure.

At first, related technical thoughts involved in the embodiments of the disclosure will be introduced.

### First, thought of determining downlink channel information on the basis of channel reciprocity

A Node B may measure an uplink SRS sent by a terminal and estimate downlink channel information on the basis of a measurement result and channel reciprocity. Compared with a codebook-based feedback manner, such a manner may better support a downlink multi-antenna transmission manner.

In a 3D-MIMO system, a Node B introduces an antenna array in both horizontal and vertical dimensions, which greatly increases a number of antennae compared with a previous antenna array only in the horizontal dimension. If a conventional codebook-based feedback manner is still used, along with increase of the number of the antennae of the Node B, reference signal overhead for downlink channel measurement will be linearly increased. In addition, the two-dimensional antenna array is diversified in form, and difficulties in codebook design will also be greatly increased, so that it is difficult to achieve a sufficient performance gain under a certain codebook size limit. Channel-reciprocity-based downlink channel estimation will not increase uplink SRS overhead as the number of the antennae increases, and is also not required to design a new codebook, so that a better performance gain may be achieved.

Therefore, the channel reciprocity may effectively obtain downlink channel information and better support the downlink multi-antenna transmission manner. Particularly in the 3D-MIMO system, due to the fact that the number of the antennae is greatly increased, determination of the downlink channel information on the basis of the channel reciprocity has more advantages compared with the conventional codebook-based manner. The channel reciprocity is mainly applied to a Time Division Duplexing (TDD) system, and may also be applied to a Frequency Division Duplexing (FDD) system.

Second, coding information required by data sending of the Node B includes a precoding matrix and a Modulation and Coding Scheme (MCS)

The Node B may determine the precoding matrix required by sending data on the basis of the downlink channel information obtained according to the channel reciprocity. Besides the precoding matrix, the Node B is also required to determine the MCS for downlink data transmission. The MCS is determined on the basis of a signal to interference and noise ratio of a received signal of UE, wherein a signal intensity is determined by an uplink SRS, but an interference intensity (mainly including neighboring cell interference) cannot be determined by the uplink SRS.

For feeding back the interference intensity, the UE may feed back a downlink reference signal-based CQI to the Node B. The interference intensity may be estimated by comparing the CQI fed back by the UE with an intensity of the uplink SRS. For example, when the CQI fed back by the UE is much lower than the intensity of the uplink SRS, it may be determined that the interference intensity is higher. The Node B may determine the MCS by combining the estimated interference intensity and the intensity of the uplink SRS.

### Third, problems for CQI feedback and channel reciprocity

At first, the CQI fed back by the UE is mismatched with a transmission mode for downlink data transmission of the Node B. Although the Node B may determine the MCS required by downlink data transmission according to the CQI fed back by the UE and the uplink SRS, the CQI fed back by the UE corresponds to a sending-diversity-based transmission mode used by the Node B and is mismatched with the transmission mode practically used by the Node B for downlink data transmission. Therefore, the Node B cannot directly use the CQI fed back by the UE, but is required to compensate the CQI, which increases processing difficulties. Moreover, the CQI fed back by the UE is quantized, and cannot be inaccurately compensated, so that downlink transmission performance is reduced. The problems are more serious in the 3D-MIMO system: along with great increase of the number of the antennae, a beamforming gain achieved when downlink data is practically sent is more obvious, while the two-antenna sending diversity-based CQI fed back by the UE is unrelated to a number of antennae of the Node B for downlink data transmission, so that the CQI fed back by the UE is more mismatched with a CQI practically used for downlink data transmission.

Second, uplink and downlink channels only have partial channel reciprocity. In a practical application, a sending link device of UE is higher in cost, so most UE has only one uplink sending link, but has more (usually two) downlink receiving links. On such a basis, a downlink channel matrix of the UE corresponds to 2×N_{T} (N_{T} represents a number of downlink antennae) channels, while the Node B may only obtain 1×N_{T} channels through the uplink SRS, that is, the uplink and downlink channels only have the partial channel reciprocity. At this moment, the UE may support downlink double-stream transmission. However, under the limit of the partial channel reciprocity, the Node B cannot obtain all channel information, and thus may perform downlink single-stream transmission only. Therefore, system resources are not fully utilized, and system performance is reduced.

Based on the above problems and technical thoughts, besides that "a Node B configures a first CSI-RS and ports configured to send the first CSI-RS, and sends the first CSI-RS to UE at the configured ports, the first CSI-RS being configured for the UE to perform downlink channel measurement and feed back the first downlink channel information", technical contents involved in the embodiments of the disclosure further include:
a: the first CSI-RS configured by the Node B for the UE is a precoded CSI-RS;
b: a number of the ports configured by the Node B to send the first CSI-RS is smaller than or equal to a number of receiving antennae of the UE;
c: the number of the ports configured by the Node B to send the first CSI-RS is two, and the two ports correspond to different polarization directions of antennae of the Node B;
d: the first downlink channel information fed back by the UE on the basis of the first CSI-RS includes a CQI and/or a PMI;
e: the Node B configures a second CSI-RS and ports configured to send the second CSI-RS, and the UE feeds back a channel RI on the basis of the second CSI-RS;
f: the second CSI-RS configured by the Node B for the UE is an un-precoded CSI-RS;
g: the Node B sends the second CSI-RS on part of occupied antennae; and
h: the number of the ports configured by the Node B to send the first CSI-RS is smaller than or equal to a number of the ports configured to send the second CSI-RS.

It is important to note that any one of the technical contents may be an independent technical content, and may also be combined.

The embodiments of the disclosure will be further described below in detail in combination with the drawings of the specification.

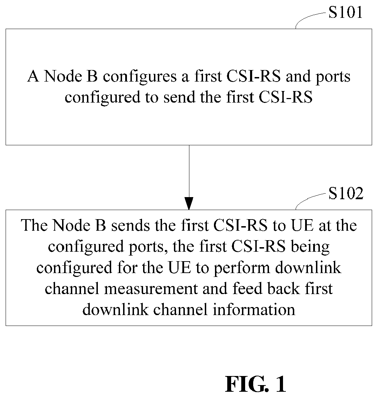

Fig. 1 is a flowchart of a channel information feedback method according to some embodiments of the disclosure. The method includes the following steps.

In S101, a Node B configures a first CSI-RS and ports configured to send the first CSI-RS.

In S102, the Node B sends the first CSI-RS to UE at the configured ports, the first CSI-RS being configured for the UE to perform downlink channel measurement and feed back first downlink channel information.

Optionally, the first CSI-RS is a precoded CSI-RS (corresponding to the technical content "a").

In a specific implementation, for the problem that a transmission mode corresponding to a CQI is mismatched with a transmission mode practically adopted by the Node B for downlink data transmission, the Node B may pre-code a CSI-RS by adopting a precoding matrix adopted for downlink data transmission, and at this moment, because a precoding matrix corresponding to the CSI-RS is the same as the precoding matrix adopted for downlink data transmission, the CQI fed back by the UE is matched with an MCS adopted for downlink data transmission.

In S102, the first downlink channel information is configured for the Node B to determine coding information used when downlink data is sent to the UE. Optionally, the first downlink channel information includes a CQI and/or a PMI (corresponding to the technical content "d").

Specifically, if the first CSI-RS is a CSI-RS of two ports, the first downlink channel information includes the CQI and the PMI; and if the first CSI-RS is a CSI-RS of a single port, the first downlink channel information includes the CQI.

Wherein, when the number of the ports configured to send the first CSI-RS is two, the two ports correspond to different polarization directions of antennae of the Node B (corresponding to the technical content "c").

In a specific implementation, the UE may measure downlink channel information on the basis of the precoded CSI-RS and feed back the CQI. For the condition that only single-stream transmission is required, a single-stream precoding matrix required for sending the CSI-RS may be obtained on the basis of channel reciprocity, wherein, for the condition of complete channel reciprocity, the single-stream precoding matrix may be obtained by channel eigenvalue decomposition, and for the condition of partial channel reciprocity, the single-stream precoding matrix may be obtained by simple channel conjugate transposition without obvious performance reduction. For the condition that double-stream transmission is required, all information of a double-stream precoding matrix required for sending the CSI-RS cannot be directly obtained on the basis of the partial channel reciprocity (part of information may be obtained). A process of configuring the first CSI-RS on the basis of the channel reciprocity is as follows: the Node B determines uplink channel information according to an uplink SRS sent by the UE; second downlink channel information is estimated on the basis of the determined uplink channel information, and precoding matrix information (which is the single-stream precoding matrix in case of single-stream transmission, and is part of information of the double-stream precoding matrix (such as V mentioned below) in case of double-stream transmission) used when downlink data is sent to the UE is determined on the basis of the estimated second downlink channel information; and the first CSI-RS is configured on the basis of the determined precoding matrix information.

A dual-polarized antenna is a main antenna type of the Node B, and a larger number of antennae may be carried on a limited antenna surface. One of characteristics of the dual-polarized antenna is that a channel correlation between two polarization directions is very low, and the channels may usually be represented as [V1, α V2] (corresponding to channels of a receiving antenna), wherein V1 and V2 represent information of the two polarization directions respectively, and α represents a phase difference between the two polarization directions and is a complex constant of which a modulus is 1. Under a normal condition, the two polarization directions are similar, that is, V1=V2, and at this moment, channels of a single receiving antenna may be represented as [V, α V]. Here, V corresponds to a physical direction, and V of different receiving antennae is almost constant when a communication distance is much longer than an interval between the receiving antennae. The phase difference is formed by combining multiple paths, and a tiny positional change may cause a different phase difference. Therefore, different receiving antennae usually have the same V but mutually independent phase differences. For example, channels of different receiving antennae are [V, α V; V, β V].

Based on the above characteristic of the dual-polarized antenna, for double-stream transmission, a probability of using a dual-polarized antenna is greatly higher than a probability of using a single-polarized antenna, wherein a precoding matrix of a first stream is usually [V, θ V], a precoding matrix of a second stream is [V, - θ V], and here, V may be determined practically on the basis of the uplink SRS. Therefore, for determining a downlink data precoding matrix, it is practically only necessary to obtain a phase difference θ (corresponding to the PMI) between the two polarization directions. Here, θ is the phase difference in the precoding matrix, and cannot be obtained through the channel reciprocity.

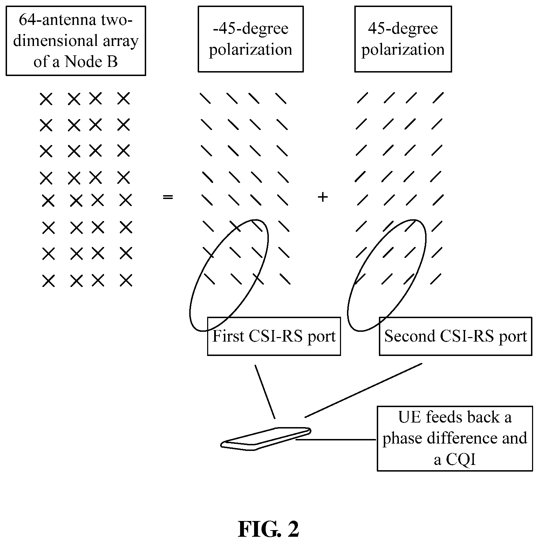

For obtaining θ, the two-port CSI-RS corresponding to the two polarization directions may be downlink precoded and sent to the UE in the embodiment of the disclosure. The precoding matrix of the two-port CSI-RS is V, and here, V may be determined on the basis of partial channel reciprocity. When receiving the two-port CSI-RS, the UE performs downlink channel measurement on the basis of the two-port CSI-RS, and feeds back the phase difference θ of the precoding matrix and the CQI to the Node B on the basis of a measurement result. The Node B may determine the precoding matrix and MCS used for downlink data transmission by virtue of the phase difference θ and the CQI, as shown in Fig. 2.

In a specific implementation, when the two-port CSI-RS is precoded, the same precoding matrix may be used, and different precoding matrixes may also be used. Specifically, the Node B may determine a precoding matrix corresponding to the CSI-RS of each port according to a channel reciprocity result. The method may also be applied to an FDD system, besides a TDD system, and at this moment, the precoding matrix corresponding to the CSI-RS may be determined on the basis of long-term channel reciprocity.

Optionally, the number of the ports configured to send the first CSI-RS is smaller than or equal to the number of receiving antennae of the UE (corresponding to the technical content "b").

In the embodiment of the disclosure, in order to achieve a purpose of reducing reference signal overhead, the number of the antenna ports configured for the first CSI-RS is smaller than or equal to the number of the receiving antennae of the UE.

Optionally, the operation that the Node B configures the first CSI-RS in S101 includes that:
when the UE is required to perform single-stream transmission, the Node B configures a first CSI-RS of a single port; and
when the UE is required to perform double-stream transmission, the Node B configures a first CSI-RS of two ports, the two ports corresponding to different polarization directions of the antennae of the Node B.

In a specific implementation process, when the UE is only required to perform single-stream transmission, for reducing the overhead, the Node B is only required to send the CSI-RS of the single port (simultaneously corresponding to the two polarization directions). When the UE is required to perform double-stream transmission, the Node B may configure the CSI-RS of the two ports, the two ports corresponding to different polarization directions of the antennae of the Node B. On such a basis, the Node B may determine whether the UE is required to perform single-stream transmission or double-stream transmission at first.

Optionally, before the operation that the Node B configures the first CSI-RS and the ports configured to send the first CSI-RS, the method further includes that:
the Node B configures a second CSI-RS and ports configured to send the second CSI-RS; and
the Node B sends the second CSI-RS to the UE at the ports configured to send the second CSI-RS, the second CSI-RS being configured for the UE to feed back a channel RI (corresponding to the technical content "e").

Optionally, the second CSI-RS is a un-precoded CSI-RS (corresponding to the technical content "f").

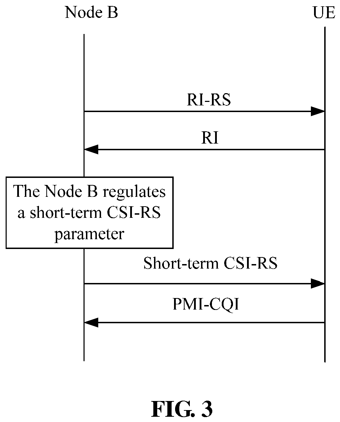

In the embodiment of the disclosure, the Node B may send an un-precoded CSI-RS, and the UE performs channel measurement on the basis of the un-precoded CSI-RS, and feeds back a corresponding channel RI to notify a number of streams downlink-transmitted by the Node B, that is, the Node B may determine whether the UE is required to perform single-stream transmission or double-stream transmission on the basis of the RI fed back by the UE. Since an RI may change slowly, an RI sending period of the Node B may be longer, which may reduce CSI-RS overhead. Here, the CSI-RS which is configured to feed back the RI and un-precoded is called as an RI-RS, and the CSI-RS configured to feed back the phase difference (corresponding to the PMI) is called as a short-term CSI-RS (with a shorter sending period). Fig. 3 is a schematic diagram of sending an RI-RS and a short-term CSI-RS.

Optionally, the operation that the Node B sends the second CSI-RS to the UE includes that:
the Node B sends the second CSI-RS to the UE on part of occupied antennae (corresponding to the technical content "g").

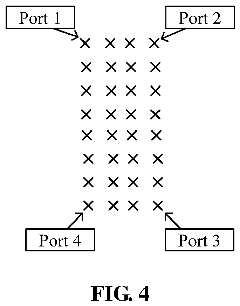

In a specific implementation process, for further reducing the reference signal overhead, the second CSI-RS may not be required to correspond to all antennae, but may correspond to a few antennae which are at longer distances (longer than a preset distance) or have different polarization directions. As shown in Fig. 4, a 64-antenna system may feed back an RI by using a CSI-RS of only four ports, the four ports are at longer distances, and the port 1 and the port 2 correspond to a polarization direction different from the port 3 and the port 4.

Optionally, the number of the ports configured to send the first CSI-RS is smaller than or equal to a number of the ports configured to send the second CSI-RS (corresponding to the technical content "h").

Optionally, the operation that the Node B configures the first CSI-RS includes that:
the Node B configures the second CSI-RS and the ports configured to send the second CSI-RS;
the Node B sends the second CSI-RS to the UE at the ports configured to send the second CSI-RS to enable the UE to feed back third downlink channel information;
the Node B determines precoding matrix information used when downlink data is sent to the UE on the basis of the third downlink channel information fed back by the UE; and
the Node B configures the first CSI-RS on the basis of the determined precoding matrix information.

In a specific implementation process, in the FDD system, if the long-term channel reciprocity is not used, the second CSI-RS (or called as an RI-RS and a long-term CSI-RS) may be configured to feed back long-term channel information (such as the abovementioned V), and the Node B may pre-code a short-term CSI-RS (the first CSI-RS) by using the long-term channel information. Under such a condition, it is only necessary to perform codebook design for the long-term CSI-RS without a need to perform codebook design for the short-term CSI-RS. Compared with the condition that long-term and short-term CSI-RSs are not distinguished, the CSI-RS overhead may be greatly reduced.

Based on the same inventive concept, the embodiments of the disclosure provide a channel information feedback method for a UE side corresponding to the channel information feedback method for a Node B side, and parts, repeated with the contents introduced for the Node B side, about specific implementation will not be elaborated.

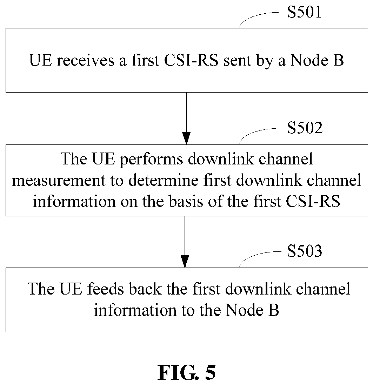

Fig. 5 is a flowchart of a channel information feedback method according to some other embodiments of the disclosure. The method includes the following steps.

In S501, UE receives a first CSI-RS sent by a Node B.

In S502, the UE performs downlink channel measurement to determine first downlink channel information on the basis of the first CSI-RS.

In S503, the UE feeds back the first downlink channel information to the Node B.

Optionally, the first CSI-RS is a precoded CSI-RS.

Optionally, the first downlink channel information includes a CQI and/or a PMI.

Optionally, if the first CSI-RS is a CSI-RS of two ports, the first downlink channel information includes the CQI and the PMI; and
if the first CSI-RS is a CSI-RS of a single port, the first downlink channel information includes the CQI.

Optionally, before the operation that the UE receives the first CSI-RS sent by the Node B, the method further includes that:
the UE receives a second CSI-RS sent by the Node B; and
the UE performs downlink channel measurement on the basis of the second CSI-RS, and feeds back a channel RI on the basis of a channel measurement result.

Optionally, before the operation that the UE receives the first CSI-RS sent by the Node B, the method further includes that:
the UE receives the second CSI-RS sent by the Node B; and
the UE performs downlink channel measurement on the basis of the second CSI-RS, and feeds back third downlink channel information, the third downlink channel information being configured for the Node B to determine precoding matrix information for configuring the first CSI-RS.

Optionally, the second CSI-RS is a precoded CSI-RS.

Specific implementations will be described below from the aspect of interaction between a Node B and UE.

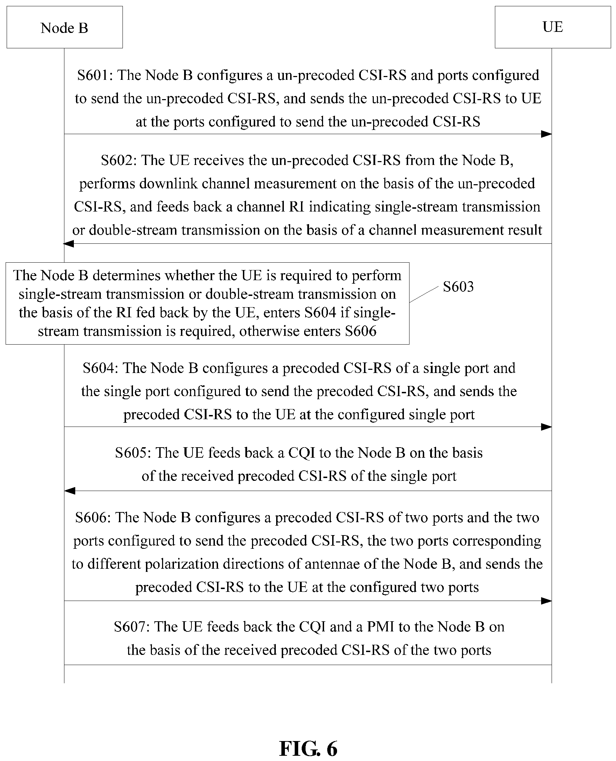

Fig. 6 is a flowchart of a channel information feedback method according to some other embodiments of the disclosure. The method includes the following steps.

In S601, the Node B configures an un-precoded CSI-RS and ports configured to send the un-precoded CSI-RS, and sends the un-precoded CSI-RS to the UE at the ports configured to send the un-precoded CSI-RS.

Here, the Node B may send the un-precoded CSI-RS to the UE only on part of occupied antennae, that is, the ports for sending the un-precoded CSI-RS are part of ports in all antenna ports of the Node B.

In S602, the UE receives the un-precoded CSI-RS from the Node B, performs downlink channel measurement on the basis of the un-precoded CSI-RS, and feeds back a channel RI indicating single-stream transmission or double-stream transmission on the basis of a channel measurement result.

In S603, the Node B determines whether the UE is required to perform single-stream transmission or double-stream transmission on the basis of the RI fed back by the UE, enters S604 if single-stream transmission is required, otherwise enters S606.

In S604, the Node B configures a precoded CSI-RS of a single port and the single port configured to send the precoded CSI-RS, and sends the precoded CSI-RS to the UE at the configured single port.

In S605, the UE feeds back a CQI to the Node B on the basis of the received precoded CSI-RS of the single port.

In S606, the Node B configures a precoded CSI-RS of two ports and the two ports configured to send the precoded CSI-RS, the two ports corresponding to different polarization directions of antennae of the Node B, and sends the precoded CSI-RS to the UE at the configured two ports.

Here, a number of ports configured to send the precoded CSI-RS is smaller than or equal to a number of receiving antennae of the UE. The number of the ports configured to send the precoded CSI-RS is smaller than or equal to a number of ports configured to send the un-precoded CSI-RS.

In S607, the UE feeds back the CQI and a PMI to the Node B on the basis of the received precoded CSI-RS of the two ports.

Based on the same inventive concept, the embodiments of the disclosure further provide a channel information feedback device corresponding to the channel information feedback method. A principle for shoving problems of the device is similar to the channel information feedback method of the embodiments of the disclosure, and implementation of the device may thus refer to implementation of the method, and repeated parts will not be elaborated.

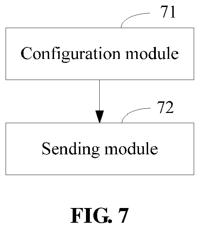

Fig. 7 is a structure diagram of a channel information feedback device according to some other embodiments of the disclosure. The device includes:
a configuration module 71, configured to configure a first CSI-RS and ports configured to send the first CSI-RS; and
a sending module 72, configured to send the first CSI-RS to UE at the configured ports, the first CSI-RS being configured for the UE to perform downlink channel measurement and feed back first downlink channel information.

Optionally, the first CSI-RS is a precoded CSI-RS.

Optionally, a number of the ports configured to send the first CSI-RS is smaller than or equal to a number of receiving antennae of the UE.

Optionally, the number of the ports configured to send the first CSI-RS is two, and the two ports correspond to different polarization directions of antennae of a Node B.

Optionally, the first downlink channel information includes a CQI and/or a PMI.

Optionally, if the first CSI-RS is a CSI-RS of two ports, the first downlink channel information includes the CQI and the PMI; and
if the first CSI-RS is a CSI-RS of a single port, the first downlink channel information includes the CQI.

Optionally, the configuration module 71 is specifically configured to:
when the UE is required to perform single-stream transmission, configure a first CSI-RS of a single port; and
when the UE is required to perform double-stream transmission, configure a first CSI-RS of two ports, the two ports corresponding to different polarization directions of the antennae of the Node B.

Optionally, the configuration module 71 is further configured to: before configuring the first CSI-RS and the ports configured to send the first CSI-RS, configure a second CSI-RS and ports configured to send the second CSI-RS; and
the sending module is further configured to: send the second CSI-RS to the UE at the ports configured by the configuration module to send the second CSI-RS, the second CSI-RS being configured for the UE to feed back a channel RI.

Optionally, the second CSI-RS is an un-precoded CSI-RS.

Optionally, the sending module 72 is specifically configured to:
send, by the Node B, the second CSI-RS to the UE on part of occupied antennae.

Optionally, the number of the ports configured to send the first CSI-RS is smaller than or equal to a number of the ports configured to send the second CSI-RS.

Optionally, the configuration module 71 is specifically configured to:
determine uplink channel information according to an uplink SRS sent by the UE;
estimate second downlink channel information on the basis of the determined uplink channel information, and determine precoding matrix information when downlink data is sent to the UE on the basis of the estimated second downlink channel information; and
configure the first CSI-RS on the basis of the determined precoding matrix information.

Optionally, the configuration module 71 is specifically configured to:
configure the second CSI-RS and the ports configured to send the second CSI-RS;
send the second CSI-RS to the UE at the ports configured to send the second CSI-RS to enable the UE to feed back third downlink channel information;
determine the precoding matrix information when the downlink data is sent to the UE on the basis of the third downlink channel information fed back by the UE; and
configure the first CSI-RS on the basis of the determined precoding matrix information.

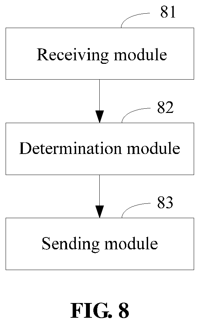

Fig. 8 is a structure diagram of a channel information feedback device according to some other embodiments of the disclosure. The device includes:
a receiving module 81, configured to receive a first CSI-RS sent by a Node B;
a determination module 82, configured to perform downlink channel measurement to determine first downlink channel information on the basis of the first CSI-RS; and
a sending module 83, configured to feed back the first downlink channel information to the Node B.

Optionally, the first CSI-RS is a precoded CSI-RS.

Optionally, the first downlink channel information includes a CQI and/or a PMI.

Optionally, if the first CSI-RS is a CSI-RS of two ports, the first downlink channel information includes the CQI and the PMI; and
if the first CSI-RS is a CSI-RS of a single port, the first downlink channel information includes the CQI.

Optionally, the receiving module 81 is further configured to: before receiving the first CSI-RS sent by the Node B, receive a second CSI-RS sent by the Node B; and
the sending module 83 is further configured to: perform downlink channel measurement on the basis of the second CSI-RS, and feed back a channel RI on the basis of a channel measurement result.

Optionally, the receiving module 81 is further configured to: before receiving the first CSI-RS sent by the Node B, receive the second CSI-RS sent by the Node B; and
the sending module 83 is further configured to: perform downlink channel measurement on the basis of the second CSI-RS, and feed back third downlink channel information, the third downlink channel information being configured for the Node B to determine precoding matrix information for configuring the first CSI-RS.

Optionally, the second CSI-RS is an un-precoded CSI-RS.

Those skilled in the art should know that the embodiment of the disclosure may be provided as a method, a system or a computer program product. Therefore, the disclosure may adopt a form of pure hardware embodiment, pure software embodiment and combined software and hardware embodiment. Moreover, the disclosure may adopt a form of computer program product implemented on one or more computer-available storage media (including, but not limited to, a disk memory, a Compact Disc Read-Only Memory (CD-ROM) and an optical memory) including computer-available program codes.

The disclosure is described with reference to flowcharts and/or block diagrams of the method, device (system) and computer program product according to the embodiment of the disclosure. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

Although the optional embodiments of the disclosure have been described, those skilled in the art may make additional variations and modifications to these embodiments once learning about the basic creative concept. Therefore, the appended claims are intended to be interpreted to include preferred embodiments and all variations and modifications falling within the scope of the disclosure.

Obviously, those skilled in the art may make various modifications and transformations to the disclosure without departing from the spirit and scope of the disclosure. Therefore, if these modifications and transformations of the disclosure fall within the scope of the claims of the disclosure and an equivalent technology thereof, the disclosure is also intended to include these modifications and transformations.

## Claims

1. A channel information feedback method, comprising:
configuring, by a Node B, a first Channel State Information-Reference Signal (CSI-RS) and ports configured to send the first CSI-RS; and
sending, by the Node B, the first CSI-RS to User Equipment (UE) at the configured ports, the first CSI-RS being configured for the UE to perform downlink channel measurement and feed back first downlink channel information.

2. The method according to claim 1, wherein the first CSI-RS is a precoded CSI-RS.

3. The method according to claim 1 or 2, wherein a number of the ports configured to send the first CSI-RS is smaller than or equal to a number of receiving antennae of the UE.

4. The method according to claim 3, wherein the number of the ports configured to send the first CSI-RS is two, and the two ports correspond to different polarization directions of antennae of the Node B.

5. The method according to claim 1 or 2, wherein the first downlink channel information comprises a Channel Quality Indicator (CQI) and/or a Precoding Matrix Indicator (PMI).

6. The method according to claim 5, wherein
if the first CSI-RS is a CSI-RS of two ports, the first downlink channel information comprises the CQI and the PMI; and
if the first CSI-RS is a CSI-RS of a single port, the first downlink channel information comprises the CQI.

7. The method according to claim 1 or 2, wherein configuring, by the Node B, the first CSI-RS comprises:
when the UE is required to perform single-stream transmission, configuring, by the Node B, a first CSI-RS of a single port; and
when the UE is required to perform double-stream transmission, configuring, by the Node B, a first CSI-RS of two ports, the two ports corresponding to different polarization directions of the antennae of the Node B.

8. The method according to claim 1 or 2, before configuring, by the Node B, the first CSI-RS and the ports configured to send the first CSI-RS, further comprising:
configuring, by the Node B, a second CSI-RS and ports configured to send the second CSI-RS; and
sending, by the Node B, the second CSI-RS to the UE at the ports configured to send the second CSI-RS, the second CSI-RS being configured for the UE to feed back a channel Rank Indication (RI).

9. The method according to claim 8, wherein the second CSI-RS is an un-precoded CSI-RS.

10. The method according to claim 8, wherein sending, by the Node B, the second CSI-RS to the UE comprises:
sending, by the Node B, the second CSI-RS to the UE on part of occupied antennae.

11. The method according to claim 8, wherein the number of the ports configured to send the first CSI-RS is smaller than or equal to a number of the ports configured to send the second CSI-RS.

12. The method according to claim 2, wherein configuring, by the Node B, the first CSI-RS comprises:
determining, by the Node B, uplink channel information according to an uplink Sounding Reference Signal (SRS) sent by the UE;
estimating, by the Node B, second downlink channel information on the basis of the determined uplink channel information, and determining precoding matrix information when downlink data is sent to the UE on the basis of the estimated second downlink channel information; and
configuring, by the Node B, the first CSI-RS on the basis of the determined precoding matrix information.

13. The method according to claim 2, wherein configuring, by the Node B, the first CSI-RS comprises:
configuring, by the Node B, a second CSI-RS and ports configured to send the second CSI-RS;
sending, by the Node B, the second CSI-RS to the UE at the ports configured to send the second CSI-RS to enable the UE to feed back third downlink channel information; and
configuring, by the Node B, the first CSI-RS on the basis of precoding matrix information when the first CSI-RS is sent to the UE.

14. The method according to claim 13, wherein configuring, by the Node B, the first CSI-RS further comprises: determining, by the Node B, the precoding matrix information when the first CSI-RS is sent to the UE on the basis of the third downlink channel information fed back by the UE.

15. A channel information feedback method, comprising:
receiving, by User Equipment (UE), a first Channel State Information-Reference Signal (CSI-RS) sent by a Node B;
performing, by the UE, downlink channel measurement to determine first downlink channel information on the basis of the first CSI-RS; and
feeding back, by the UE, the first downlink channel information to the Node B.

16. The method according to claim 15, wherein the first CSI-RS is a precoded CSI-RS.

17. The method according to claim 15 or 16, wherein the first downlink channel information comprises a Channel Quality Indicator (CQI) and/or a Precoding Matrix Indicator (PMI).

18. The method according to claim 15 or 16, wherein
if the first CSI-RS is a CSI-RS of two ports, the first downlink channel information comprises the CQI and the PMI; and
if the first CSI-RS is a CSI-RS of a single port, the first downlink channel information comprises the CQI.

19. The method according to claim 15, further comprising:
receiving, by the UE, a second CSI-RS sent by the Node B; and
performing, by the UE, downlink channel measurement on the basis of the second CSI-RS, and feeding back a channel Rank Indication (RI) on the basis of a channel measurement result.

20. The method according to claim 19, wherein, before the UE receives the first CSI-RS sent by the Node B, the UE receives the second CSI-RS sent by the Node B.

21. The method according to claim 15, further comprising:
receiving, by the UE, a second CSI-RS sent by the Node B; and
performing, by the UE, downlink channel measurement on the basis of the second CSI-RS, and feeding back third downlink channel information, the third downlink channel information being configured for the Node B to determine precoding matrix information for configuring the first CSI-RS.

22. The method according to claim 21, wherein, before the UE receives the first CSI-RS sent by the Node B, the UE receives the second CSI-RS sent by the Node B.

23. The method according to claim 19 or 21, wherein the second CSI-RS is an un-precoded CSI-RS.

24. A channel information feedback device, comprising:
a configuration module, configured to configure a first Channel State Information-Reference Signal (CSI-RS) and ports configured to send the first CSI-RS; and
a sending module, configured to send the first CSI-RS to User Equipment (UE) at the configured ports, the first CSI-RS being configured for the UE to perform downlink channel measurement and feed back first downlink channel information.

25. The device according to claim 24, wherein the first CSI-RS is a precoded CSI-RS.

26. The device according to claim 24 or 25, wherein a number of the ports configured to send the first CSI-RS is smaller than or equal to a number of receiving antennae of the UE.

27. The device according to claim 26, wherein the number of the ports configured to send the first CSI-RS is two, and the two ports correspond to different polarization directions of antennae of a Node B.

28. The device according to claim 24 or 25, wherein the first downlink channel information comprises a Channel Quality Indicator (CQI) and/or a Precoding Matrix Indicator (PMI).

29. The device according to claim 28, wherein
if the first CSI-RS is a CSI-RS of two ports, the first downlink channel information comprises the CQI and the PMI; and
if the first CSI-RS is a CSI-RS of a single port, the first downlink channel information comprises the CQI.

30. The device according to claim 24 or 25, wherein the configuration module is specifically configured to:
when the UE is required to perform single-stream transmission, configuring, by the Node B, a first CSI-RS of a single port; and
when the UE is required to perform double-stream transmission, configuring, by the Node B, a first CSI-RS of two ports, the two ports corresponding to different polarization directions of the antennae of the Node B.

31. The device according to claim 24 or 25, wherein
the configuration module is further configured to, before configuring the first CSI-RS and the ports configured to send the first CSI-RS, configure a second CSI-RS and ports configured to send the second CSI-RS; and
the sending module is further configured to send the second CSI-RS to the UE at the ports configured by the configuration module to send the second CSI-RS, the second CSI-RS being configured for the UE to feed back a channel Rank Indication (RI).

32. The device according to claim 31, wherein the second CSI-RS is an un-precoded CSI-RS.

33. The device according to claim 31, wherein the sending module is specifically configured to:
send, by the Node B, the second CSI-RS to the UE on part of occupied antennae.

34. The device according to claim 31, wherein the number of the ports configured to send the first CSI-RS is smaller than or equal to a number of the ports configured to send the second CSI-RS.

35. The device according to claim 25, wherein the configuration module is specifically configured to:
determine uplink channel information according to an uplink Sounding Reference Signal (SRS) sent by the UE;
estimate second downlink channel information on the basis of the determined uplink channel information, and determine precoding matrix information when downlink data is sent to the UE on the basis of the estimated second downlink channel information; and
configure the first CSI-RS on the basis of the determined precoding matrix information.

36. The device according to claim 25, wherein the configuration module is specifically configured to:
configure a second CSI-RS and ports configured to send the second CSI-RS;
send the second CSI-RS to the UE at the ports configured to send the second CSI-RS to enable the UE to feed back third downlink channel information; and
configure the first CSI-RS on the basis of precoding matrix information when the first CSI-RS is sent to the UE.

37. The device according to claim 36, wherein the configuration module is further configured to: determine the precoding matrix information when the first CSI-RS is sent to the UE on the basis of the third downlink channel information fed back by the UE.

38. A channel information feedback device, comprising:
a receiving module, configured to receive a first Channel State Information-Reference Signal (CSI-RS) sent by a Node B;
a determination module, configured to perform downlink channel measurement to determine first downlink channel information on the basis of the first CSI-RS; and
a sending module, configured to feed back the first downlink channel information to the Node B.

39. The device according to claim 38, wherein the first CSI-RS is a precoded CSI-RS.

40. The device according to claim 38 or 39, wherein the first downlink channel information comprises a Channel Quality Indicator (CQI) and/or a Precoding Matrix Indicator (PMI).

41. The device according to claim 38 or 39, wherein
if the first CSI-RS is a CSI-RS of two ports, the first downlink channel information comprises the CQI and the PMI; and
if the first CSI-RS is a CSI-RS of a single port, the first downlink channel information comprises the CQI.

42. The device according to claim 38, wherein
the receiving module is further configured to receive a second CSI-RS sent by the Node B; and
the sending module is further configured to perform downlink channel measurement on the basis of the second CSI-RS, and feed back a channel Rank Indication (RI) on the basis of a channel measurement result.

43. The device according to claim 42, wherein the receiving module receives the second CSI-RS sent by the Node B before receiving the first CSI-RS sent by the Node B.

44. The device according to claim 38, wherein
the receiving module is further configured to receive a second CSI-RS sent by the Node B; and
the sending module is further configured to perform downlink channel measurement on the basis of the second CSI-RS, and feed back third downlink channel information, the third downlink channel information being configured for the Node B to determine precoding matrix information for configuring the first CSI-RS.

45. The device according to claim 44, wherein the receiving module receives the second CSI-RS sent by the Node B before receiving the first CSI-RS sent by the Node B.

46. The device according to claim 42 or 44, wherein the second CSI-RS is an un-precoded CSI-RS.

## Amended claims

### Amended claims under Art. 19.1 PCT

1. A channel information feedback method, comprising:
configuring, by a Node B, a first Channel State Information-Reference Signal (CSI-RS) and ports configured to send the first CSI-RS; and
sending, by the Node B, the first CSI-RS to User Equipment (UE) at the configured ports, the first CSI-RS being configured for the UE to perform downlink channel measurement and feed back first downlink channel information;
wherein the method further comprises:
configuring, by the Node B, a second CSI-RS and ports configured to send the second CSI-RS; and
sending, by the Node B, the second CSI-RS to the UE at the ports configured to send the second CSI-RS, the second CSI-RS being configured for the UE to feed back a channel Rank Indication (RI);
wherein the second CSI-RS is an un-precoded CSI-RS.

2. The method according to claim 1, wherein the first CSI-RS is a precoded CSI-RS.

3. The method according to claim 1 or 2, wherein the first downlink channel information comprises a Channel Quality Indicator (CQI) and/or a Precoding Matrix Indicator (PMI).

4. The method according to claim 3, wherein
if the first CSI-RS is a CSI-RS of two ports, the first downlink channel information comprises the CQI and the PMI; and
if the first CSI-RS is a CSI-RS of a single port, the first downlink channel information comprises the CQI.

5. The method according to claim 2, wherein configuring, by the Node B, the first CSI-RS comprises:
determining, by the Node B, uplink channel information according to an uplink Sounding Reference Signal (SRS) sent by the UE;
estimating, by the Node B, second downlink channel information on the basis of the determined uplink channel information, and determining precoding matrix information when downlink data is sent to the UE on the basis of the estimated second downlink channel information; and
configuring, by the Node B, the first CSI-RS on the basis of the determined precoding matrix information.

6. The method according to claim 2, wherein configuring, by the Node B, the first CSI-RS comprises:
configuring, by the Node B, a second CSI-RS and ports configured to send the second CSI-RS;
sending, by the Node B, the second CSI-RS to the UE at the ports configured to send the second CSI-RS to enable the UE to feed back third downlink channel information; and
configuring, by the Node B, the first CSI-RS on the basis of precoding matrix information when the first CSI-RS is sent to the UE.

7. A channel information feedback method, comprising:
receiving, by User Equipment (UE), a first Channel State Information-Reference Signal (CSI-RS) sent by a Node B;
performing, by the UE, downlink channel measurement to determine first downlink channel information on the basis of the first CSI-RS; and
feeding back, by the UE, the first downlink channel information to the Node B;
wherein the method further comprises:
receiving, by the UE, a second CSI-RS sent by the Node B; and
performing, by the UE, downlink channel measurement on the basis of the second CSI-RS, and feeding back a channel Rank Indication (RI) on the basis of a channel measurement result;
wherein the second CSI-RS is an un-precoded CSI-RS.

8. The method according to claim 7, wherein the first CSI-RS is a precoded CSI-RS.

9. The method according to claim 7 or 8, wherein the first downlink channel information comprises a Channel Quality Indicator (CQI) and/or a Precoding Matrix Indicator (PMI).

10. A channel information feedback device, comprising:
a configuration module, configured to configure a first Channel State Information-Reference Signal (CSI-RS) and ports configured to send the first CSI-RS; and
a sending module, configured to send the first CSI-RS to User Equipment (UE) at the configured ports, the first CSI-RS being configured for the UE to perform downlink channel measurement and feed back first downlink channel information;
wherein the configuration module is further configured to configure a second CSI-RS and ports configured to send the second CSI-RS; and
the sending module is further configured to send the second CSI-RS to the UE at the ports configured by the configuration module to send the second CSI-RS, the second CSI-RS being configured for the UE to feed back a channel Rank Indication (RI);
wherein the second CSI-RS is an un-precoded CSI-RS.

11. The device according to claim 10, wherein the first CSI-RS is a precoded CSI-RS.

12. The device according to claim 10 or 11, wherein the first downlink channel information comprises a Channel Quality Indicator (CQI) and/or a Precoding Matrix Indicator (PMI).

13. A channel information feedback device, comprising:
a receiving module, configured to receive a first Channel State Information-Reference Signal (CSI-RS) sent by a Node B;
a determination module, configured to perform downlink channel measurement to determine first downlink channel information on the basis of the first CSI-RS; and
a sending module, configured to feed back the first downlink channel information to the Node B;
wherein the receiving module is further configured to receive a second CSI-RS sent by the Node B; and
the sending module is further configured to perform downlink channel measurement on the basis of the second CSI-RS, and feed back a channel Rank Indication (RI) on the basis of a channel measurement result;
wherein the second CSI-RS is an un-precoded CSI-RS.

14. The device according to claim 13, wherein the first CSI-RS is a precoded CSI-RS.

15. The device according to claim 13 or 14, wherein the first downlink channel information comprises a Channel Quality Indicator (CQI) and/or a Precoding Matrix Indicator (PMI).
